Europäisches Patentamt

European Patent Office

Office européen des brevets

(11) Veröffentlichungsnummer: **0 495 210 A1**

# EUROPÄISCHE PATENTANMELDUNG

(21) Anmeldenummer: **91121468.2**

(22) Anmeldetag: **14.12.91**

(51) Int. Cl.5: **A01B** 63/11, A01D 34/64, F15B 15/14

(30) Priorität: **21.12.90 US 632282**

(43) Veröffentlichungstag der Anmeldung:
**22.07.92 Patentblatt 92/30**

(84) Benannte Vertragsstaaten:
**DE FR GB IT SE**

(71) Anmelder: **DEERE & COMPANY**
**1 John Deere Road**
**Moline, Illinois 61265(US)**

(72) Erfinder: **Sundberg, John David**
**N7421 Hillendale Parkway**
**Beaver Dam, Wisconsin 53916(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

(54) **Vorrichtung zur hydraulischen Gewichtsverlagerung.**

(57) Bei einer Vorrichtung zur hydraulischen Gewichtsverlagerung eines auf dem Boden laufenden und an ein Fahrzeug angebauten Gerätes mit einer an das Fahrzeug und an das Gerät anschließbaren Zylindereinheit (14), die einen Zylinderteil (22) aufweist, in dem ein Kolbenteil (42) und ein aus dem Zylinderteil (22) einenends austretender Stangenteil (32) verstellbar sind, ist der Kolbenteil (42) auf dem Stangenteil (32), der an seinem sich im Zylinderteil (22) befindlichen Ende (34) einen Anschlag (52) aufweist, verschiebbar angeordnet.

FIG. 3

EP 0 495 210 A1

Die Erfindung bezieht sich auf eine Vorrichtung zur hydraulischen Gewichtsverlagerung eines auf dem Boden laufenden und an ein Fahrzeug angebauten Gerätes mit einer an das Fahrzeug und an das Gerät anschließbaren Zylindereinheit, die einen Zylinderteil aufweist, in dem ein Kolbenteil und ein aus dem Zylinderteil einenends austretender Stangenteil verstellbar sind.

Diese bekannte Vorrichtung (US-A-4 920 732) findet bei einem Großflächenmäher Verwendung, d. h. einem Fahrzeug für die Garten- und Landschaftspflege mit einem frontseitig angebauten Rasenmäher. Luftbereifte Leiträder lenken den Rasenmäher, der über vertikal schwenkbare Schubstangen an das Fahrzeug angeschlossen ist. Die Zylindereinheit greift einenends im Bereich der Antriebsräder am Fahrzeug und anderenends am Mähwerksgehäuse an und weist einen Stangenteil auf, der mit dem Kolbenteil fest verbunden und wie ein üblicher hydraulisch beaufschlagbarer Arbeitszylinder ausgebildet ist. Das kolbenstangenseitige Ende des Arbeitszylinders ist an einen Hydraulikkreis angeschlossen, der mit einem Ventil versehen ist, das eine manuell veränderbare Durchflußöffnung aufweist. Je nachdem wie groß die Durchflußöffnung eingestellt ist, kann eine Gewichtsverlagerung von dem Rasenmäher auf die Antriebsräder des Fahrzeuges, wodurch eine bessere Zugkraft bei nassem Rasen erzielt wird, oder ein vertikales Ausheben des Rasenmähers erfolgen, um Bordsteine oder andere Hindernisse überwinden zu können. Während des Einsatzes läuft der Rasenmäher vor dem Fahrzeug her und folgt der Bodenkontur. Sobald der Rasenmäher auf eine Bodenerhebung trifft, wird er sich mit Bezug auf das Fahrzeug, dessen Räder die Bodenerhebung noch nicht erreicht haben, nach oben bewegen. Hierbei wird das Mähwerksgehäuse auf den Stangenteil eine nach oben gerichtete Kraft ausüben und den Kolbenteil im Zylinderteil nach oben verschieben. Der Kolbenteil verschiebt sich sehr schnell nach oben im Zylinderteil, da dieser wegen des großen Gewichtes des Fahrzeuges nicht nach oben ausweichen kann. Flüssigkeit fließt bei diesen Vorgang sehr schnell in das kolbenseitige Ende des Arbeitszylinders nach, so daß die schnelle Aufwärtsverstellung des Kolbenteils nicht verzögert wird. Sobald der Rasenmäher die Spitze der Bodenerhebung überwunden hat, kippt das frontseitige Ende des Rasenmähers wieder nach unten für den weiteren Rasenschnitt. Das Gewicht des Rasenmähers zieht den Kolbenteil im Zylinderteil wieder nach unten, wobei Flüssigkeit aus dem kolbenstangenseitigen Ende des Arbeitszylinders herausgedrückt wird. Die kleine Durchflußöffnung im Arbeitszylinder und der im Hydraulikkreis herrschende Druck wirken dem aber entgegen. Da das Gewicht des Rasenmähers, das im Vergleich zu dem des Fahrzeuges gering ist, die einzige Kraft ist, die den Kolbenteil nach unten zieht und die Flüssigkeit aus den Zylinderteil drückt, erfolgt die Abwärtsbewegung des Rasenmähers relativ langsam und zu viel ungeschnittenes Gras kann zurückbleiben.

Die mit der Erfindung zu lösende Aufgabe wird darin gesehen, die Vorrichtung zur hydraulischen Gewichtsverlagerung vorteilhafter auszubilden. Diese Aufgabe ist nach der Erfindung dadurch gelöst worden, daß der Kolbenteil auf dem Stangenteil, der an seinem sich im Zylinderteil befindlichen Ende einen Anschlag aufweist, verschiebbar angeordnet ist. Auf diese Weise kann sich der Stangenteil beim Überwinden einer Bodenerhebung gegenüber dem Kolbenteil, der dann im wesentlichen seine vorherige Lage beibehält, im Zylinderteil verstellen und beim Absenken des Gerätes braucht aus dem Zylinderteil keine Flüssigkeit verdrängt zu werden. Der Absenkvorgang erfolgt damit sehr schnell. Der Anschlag übernimmt in vorteilhafter Weise mehrere Funktionen. Eine davon ist, daß er ein Herausrutschen des Stangenteils aus dem Kolbenteil verhindert. Eine weitere wird darin gesehen, daß der Kolbenteil bei Druckerhöhung gegebenenfalls gegen den Anschlag drückt, wodurch die Gewichtsverlagerung stattfindet. Bei noch größerer Druckerhöhung schiebt der Kolbenteil den Stangenteil über den Anschlag in die Höhe und hebt damit das Gerät vom Boden ab, um Bordsteine oder dergleichen überwinden zu können.

Der Anschlag kann als Anschlagring ausgebildet sein.

Damit Kolben- und Stangenteil in einfacher Weise Relativbewegungen ausführen können, ist nach der Erfindung ferner vorgesehen, daß der Kolbenteil eine Zentralöffnung aufweist, durch die sich der Stangenteil erstreckt.

Für eine Vorrichtung, bei der der Zylinderteil an seinem dem Gerät zugelegenen Ende über einen Kanal mit einem Hydraulikkreis verbunden ist, kann erfindungsgemäß noch vorgesehen werden, daß der Kolbenteil entgegen der Wirkung einer Feder verstellbar ist, die einenends gegen den Kolbenteil und anderenends gegen das dem Kanal abgelegene Ende des Zylinderteils anliegt.

Damit sich der Stangenteil in der Feder verschieben läßt, sieht die Erfindung ferner vor, daß der Innendurchmesser der Feder größer ist als der Außendurchmesser des Stangenteils.

Wenn der Zylinderteil durch den Kolbenteil in eine obere und in eine untere Kammer aufgeteilt ist, können im Einsatz beide Kammern mit Flüssigkeit gefüllt sein, weshalb nach einem anderen erfindungsgemäßen Vorschlag beide Kammern an den Hydraulikkreis angeschlossen sind und eine Ventilsteuerung vorgesehen ist, über die der Druck derart steuerbar ist, daß beim Einsatz des Gerätes in ebenem Gelände der Kolbenteil gegen den Anschlag anliegt oder in Richtung auf das Kolbenstangenseitige Ende des Zylinderteils verschoben wird.

In der Zeichnung ist ein nachfolgend näher erläutertes Ausführungsbeispiel der Erfindung dargestellt. Es zeigt:

Fig. 1     ein frontseitig an ein Fahrzeug angeschlossenes Gerät mit einem schematisch angedeuteten Hydraulikkreis,

Fig. 2     eine Zylindereinheit, die mit dem in Fig. 8 dargestellten Hydraulikkreis zusammenarbeitet, in einer Stellung, in der das Gerät auf ebenem Grund betrieben wird,

Fig. 3     eine Zylindereinheit, die mit dem in Fig. 1 dargestellten Hydraulikkreis zusammenarbeitet, in einer Stellung, in der das Gerät auf einer Bodenerhebung betrieben wird,

Fig. 4     die Zylindereinheit nach Fig. 3 in einer Stellung, in der das Gerät in einer Bodenvertiefung betrieben wird,

Fig. 5     die Zylindereinheit nach Fig. 3 in einer Stellung, in der das Gerät auf ebenem Boden betrieben wird,

Fig. 6     die Zylindereinheit nach Fig. 3 in einer Stellung, in der ein im Hydraulikkreis vorgesehenes Drosselventil geschlossen ist,

Fig. 7     eine weitere Ausführungsform der Zylindereinheit und

Fig. 8     eine andere Ausbildung des Hydraulikkreises.

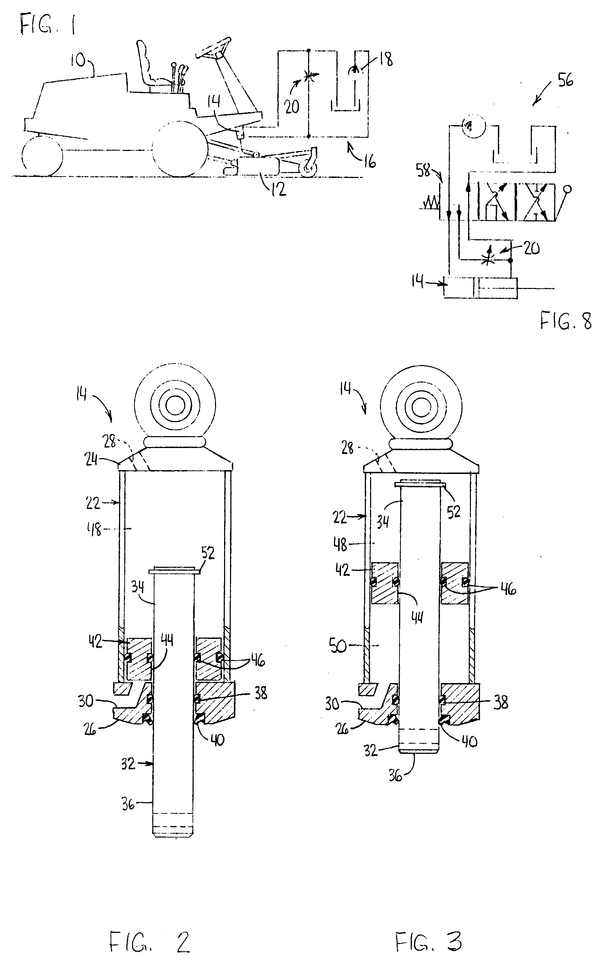

In Fig. 1 der Zeichnung ist ein Fahrzeug 10 in Form eines Kleinschleppers für die Grundstückspflege dargestellt, an dessen Frontseite ein Gerät 12, beispielsweise ein Rasenmäher oder ein Schneepflug, angeschlossen ist. Fig. 1 zeigt einen sich auf Rädern abstützenden und der Bodenkontur folgenden Rasenmäher, der über ein Gestänge an den Kleinschlepper gelenkig angeschlossen ist und im Betrieb vor dem Kleinschlepper herfährt. Das Gestänge erlaubt es, daß das Gerät beim Auftreffen auf Bodenunebenheiten gegenüber dem Fahrzeug Relativbewegungen ausführen kann.

Zwischen das Gerät 12 und das Fahrzeug 10 ist noch eine Zylindereinheit 14 geschaltet, die, wie nachfolgend noch im einzelnen erläutert wird, mehrere Funktionen wahrnehmen kann. Die Zylindereinheit 14 ist in einem Hydraulikkreis eingebunden, und zwar in den Hydraulikkreis 16 nach Fig. 1 oder in den Hydraulikkreis 56 nach Fig. 8. Eine Pumpe 18 versorgt den Hydraulikkreis 16 nach Fig. 1 mit Druckflüssigkeit. Sie kann zusätzlich auch noch weitere Verbraucher, wie eine hydraulische Lenkhilfe, speisen. In den beiden Hydraulikkreisen 16 und 56 ist ein Drosselventil 20 mit einer veränderbaren Durchflußöffnung vorgesehen, die verstellt werden kann, um das Gerät 12 beispielsweise zum Überwinden von Bordsteinen oder anderen Hindernissen von Boden abzuheben. Die Kombination Hydraulikkreis, Zylindereinheit und Drosselventil dient außerdem noch dazu, einen Gewichtsanteil des Gerätes bei Bedarf auf das Fahrzeug zu verlagern, wodurch dessen Fahrstabilität und Zugkraft erhöht wird.

Die Zylindereinheiten können unterschiedlich aufgebaut sein. Sie weisen aber alle die Besonderheit auf, daß ihr Stangenteil 32 und ihr Kolbenteil 42 zueinander Relativbewegungen ausführen können. Eine erste Ausführungsform der Zylindereinheit 14 ist in den Fig. 2 bis 6 in ihren verschiedenen Stellungen dargestellt. Sie weist einen Zylinderteil 22 mit einem Sockelende 24 und einem Stangenende 26 auf, der schwenkbeweglich an das Fahrzeug 10 angeschlossen ist. Im Bereich des Sockelendes 24 und des Stangenendes 26 findet sich im Zylinderteil 22 je ein Kanal 28 und 30 für den Ein- und Austritt von Druckflüssigkeit. Der Stangenteil 32 erstreckt sich von außen durch das Stangenende 26 bis in das Innere des Zylinderteils 22, ist in dem Stangenende 26 verschiebbar geführt, weist ein erstes oder oberes Ende 34 und ein zweites oder unteres Ende 36 auf und ist mit dem Gerät 12 schwenkbeweglich verbunden. Um ein Austreten von Druckflüssigkeit aus dem Zylinderteil 22 zu verhindern, ist im Bereich des Stangenendes 26 eine Dichtung 38 zwischen dem Stangenteil 26 und dem Zylinderteil 22 vorgesehen. Gleichermaßen ist in diesem Bereich unterhalb der Dichtung 38 noch ein Abstreifer 40 angeordnet, der dem Eindringen von Schmutz in den Zylinderteil 22 vorbeugen soll. Der Kolbenteil 42 ist innerhalb des Zylinderteils 22 verschiebbar und nimmt den Stangenteil 32 verschiebbar auf. Hierzu weist der Kolbenteil 42 eine Zentralöffnung 44 auf, die die gegenseitige Relativverschiebung ermöglicht. Dichtungen 46 sind an dem Kolbenteil 42 zwischen dem Kolbenteil und der Innenwandung des Zylinderteils 22 und zwischen dem Kolbenteil und dem Stangenteil 26 angeordnet, so daß zwei von einander getrennte Kammern 48 und 50 entstehen, die im Betrieb mit Druckflüssigkeit gefüllt sind. Das Volumen der beiden Kammern ist je nach der Stellung des Kolbenteils 42 im Zylinderteil 22 unterschiedlich. In der Zeichnung ist die oberhalb des Kolbenteils liegende Kammer oder Sockelkammer mit 48 und die unterhalb des Kolbenteils befindliche Kammer oder Stangenkammer mit 50 bezeichnet. Am oberen Ende 34 des Stangenteils 32 ist noch ein Anschlagring 52 eingesetzt, der ein Austreten des Stangenteils aus dem Zylinderteil 22 verhindert und gegen den der Kolbenteil 42 zur Anlage kommen kann, wenn sich der Kolbenteil 42 auf dem Stangenteil 26 in Abhängigkeit von in die untere Kammer 50 eingedrückter Flüssigkeit verschiebt.

Der Zylinderteil 22 kann in Verbindung mit dem Hydraulikkreis 16 und dem Drosselventil 20 mehrere Aufgaben erfüllen. Eine davon ist die Übertragung eines Teils des Gerätegewichtes auf das Fahrzeug 10 und eine weitere das Ausheben des Gerätes. Auf diese beiden Funktionen wird zunächst eingegangen. Fig. 5 zeigt den Kolbenteil 42 und den Stangenteil 32 in der Neutral- oder Normalstellung, in der das Gerät auf ebenem Boden betrieben wird. Der Anschlagring 52 befindet sich etwa in der Mitte des Zylinderteils 22, und der Kolbenteil 42 liegt gegen den Anschlagring 52 an, da sich in der unteren Kammer 50 ein etwas größerer Druck als in der oberen Kammer 48 befindet. Diese Druckdifferenz wird zumindest teilweise durch das Drosselventil 20 hervorgerufen, da bei vollständig geöffnetem Drosselventil 20 eine Druckdifferenz von etwa 1,96 atü (28 psi) anfällt. Dieser Druckabfall bewirkt, daß der Druck stromaufwärts des Drosselventils 20 im Hydraulikkreis 16 höher ist als stromabwärts des Drosselventils. Da im Hydraulikkreis 16 die untere Kammer 50 stromaufwärts des Drosselventils 20 angeordnet ist, ist der Druck in der unteren Kammer 50 in der Normalstellung größer als in der oberen Kammer 48, die stromabwärts des Drosselventils 20 liegt. Der größere Druck schiebt dann den Kolbenteil 42 auf dem Stangenteil 26 soweit nach oben, bis er gegen den Anschlagring 52 zu liegen kommt. Die Druckdifferenz ist andererseits aber nicht groß genug, um das Gerät 12 ausheben zu können.

Um nun eine Gewichtsübertragung oder ein Ausheben des Gerätes 12 zu bewirken, wird die Durchflußöffnung im Drosselventil 20 verkleinert, so daß über den Kanal 30 mehr Druckflüssigkeit in die untere Kammer 50 einströmt. Der dann in der unteren Kammer 50 ansteigende Druck bewirkt, daß der Kolbenteil 42 gegen den über ihm liegenden Anschlagteil 52 gepreßt wird. Hierdurch wird ein Teil des Gerätegewichtes auf das Fahrzeug übertragen.

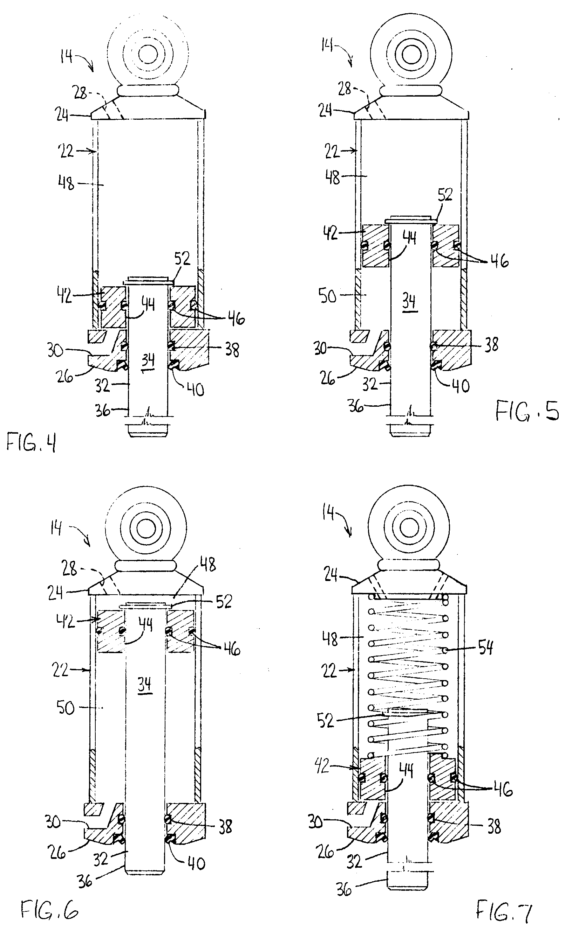

Zum Ausheben des Gerätes wird die Durchflußöffnung im Drosselventil noch mehr verkleinert oder sogar geschlossen, so daß noch mehr Druckflüssigkeit in die untere Kammer 50 einströmt. Der dann in der unteren Kammer 50 weiter ansteigende Druck wird schließlich den Kolbenteil 42 und damit auch den Stangenteil 32 nach oben verstellen, bis beide Teile die in Fig. 6 dargestellte Position einnehmen, in der das Gerät 12 soweit ausgehoben ist, daß Hindernisse, wie Bordsteine, leicht überwunden werden können.

Zum Absenken des Gerätes wird die Durchflußöffnung im Drosselventil 20 wieder geöffnet oder vergrößert, wodurch der Druck in der unteren Kammer 50 abfällt. Das Gerätegewicht kann dann den Stangenteil 32 und damit auch den Kolbenteil 42 in dem Zylinderteil 22 nach unten ziehen. Bei diesem Vorgang wird Flüssigkeit aus der unteren Kammer 50 in den Hydraulikkreis 16 eintreten, und gleichzeitig wird Flüssigkeit in die sich vergrößernde Kammer 48 gesaugt. Wenn das Gerät wieder auf den Boden aufgesetzt hat, werden der Kolbenteil 42 und der Stangenteil 32 wieder die in Fig. 5 gezeigte Stellung einnehmen. Sobald das Gerät auf den Boden aufgesetzt hat, kommt der Stangenteil 32 zum Stillstand. Der Kolbenteil 42 wird dann auch nicht mehr weiter nach unten wandern, sondern wieder gegen den Anschlagring 52 anliegen, da bei entsprechend geöffnetem Drosselventil 20 sich wieder in der unteren Kammer 50 ein Druck aufbaut, der den Kolbenteil 42 in seiner in Fig. 5 gezeigten Stellung hält.

Trifft das Gerät 12 während des Einsatzes auf ebenem Boden, bei dem sich der Stangenteil 32 in seiner in Fig. 5 gezeigten Position befindet, auf eine Bodenerhebung, dann führt das Gerät 12 gegenüber dem Fahrzeug 10 zunächst eine nach oben gerichtete Relativbewegung aus. Da der Stangenteil 32 aber an das Gerät 12 angeschlossen ist, wird er sich bei diesem Vorgang in dem Zylinderteil 22 nach oben verstellen, und zwar in eine Stellung, wie sie in Fig. 3 wiedergegeben ist. Der Kolbenteil 42 kann bei dem sich im Zylinderteil 22 nach oben verstellenden Stangenteil 32 seine in Fig. 5 dargestellte Stellung im Prinzip beibehalten, da der Stangenteil 32 in dem Kolbenteil 42 auf Grund der Zentralöffnung 44 verschieblich ist. Bei sich in den Zylinderteil 22 einschiebendem Stangenteil 32 verkleinert sich das Fassungsvolumen in der oberen Kammer 48. Eine Druckerhöhung findet statt und Flüssigkeit kann durch den Kanal 48 austreten. Infolge der Druckerhöhung in der oberen Kammer 48 kann der Kolbenteil 42 auch auf dem Stangenteil 32 in dem Zylinderteil 22 nach unten wandern. Das Einschieben des Stangenteils 32 in den Zylinderteil 22 erfolgt relativ schnell, da der Zylinderteil 22 durch das Gewicht des Fahrzeuges an einem Ausweichen nach oben gehindert ist.

Sobald das Gerät 12 die Kuppe der Bodenerhebung überwunden hat, bewegt sich das Gerät 12 wieder auf Grund seines Eigengewichtes nach unten. Der Stangenteil 32 verschiebt sich dabei in dem Zylinderteil 22 nach außen oder nach unten, und zwar aus seiner in Fig. 3 gezeigten Position in die Stellung nach Fig. 5. Während des sich nach unten Verschieben des Stangenteils 32 aus der Stellung nach Fig. 3 muß der in der oberen Kammer 48 von dem Stangenteil 32 vorher eingenommene Raum wieder mit Flüssigkeit aufgefüllt werden. Er kann durch in die obere Kammer 48 eingesaugte Flüssigkeit oder durch den sich auf dem Stangenteil 32 nach oben schiebenden Kolbenteil 42 aufgefüllt werden. Da das Gewicht des Gerätes 12 im Vergleich zu dem des Fahrzeuges 10 gering ist, ist auch die Kraft, die zum Einsaugen von

4

Flüssigkeit in die obere Kammer 48 beim sich nach unten Bewegen des Gerätes benötigt wird, relativ gering. Jedenfalls ist die Flüssigkeitsmenge, die in die obere Kammer eingesaugt wird, geringer als bei herkömmlichen Anlagen. Der Grund hierfür ist in der Tatsache zu sehen, daß der Stangenteil 32 sich in dem Kolbenteil 42 beim sich nach unten Bewegen des Gerätes 12 verschiebt. Bei herkömmlichen Zylindereinheiten ist der Stangenteil mit dem Kolbenteil fest verbunden, so daß beim sich auf und ab bewegenden Gerät die Flüssigkeitsmenge, die verdrängt wurde oder aufgefüllt werden mußte, größer war als bei der vorbeschriebenen Zylindereinheit, bei der der Stangenteil 32 in dem Kolbenteil 42 verschiebbar geführt ist. Da nunmehr die eingesaugte Flüssigkeitsmenge geringer ist, erfolgt auch das sich nach unten Bewegen des Gerätes schneller als bisher. Das Gerät kann seinen normalen Betrieb deshalb schneller wieder aufnehmen.

Handelt es sich bei dem Gerät um einen Rasenmäher, dann wird der Schneidvorgang, wenn die Kuppe der Bodenerhebung überwunden ist, schneller aufgenommen als bisher und weniger ungeschnittenes Gras bleibt zurück.

Wird mit dem Gerät auf ebenem Gelände gearbeitet und trifft dann auf eine Bodenvertiefung, so wird es infolge seines Eigengewichtes die Bodenvertiefung durchfahren und sich dabei gegenüber dem Fahrzeug nach unten bewegen. Bei diesem Vorgang werden sich zunächst der Stangenteil 32 und der Kolbenteil 42 aus ihrer in Fig. 5 gezeigten Stellung in die in Fig. 4 wiedergegebene Stellung verschieben. Wenn sich der Stangenteil 32 und der Kolbenteil 42 nach unten verschieben, wird Flüssigkeit aus der unteren Kammer 50 in den Hydraulikkreis 16 gedrückt. Gleichzeitig wird der dann in der oberen Kammer 48 frei werdende Raum durch Flüssigkeit aus dem Hydraulikkreis 16 aufgefüllt.

Da bei dem in Fig. 1 gezeigten Hydraulikkreis 16 der Druck in der unteren Kammer 50 beim Arbeiten im ebenen Gelände größer ist als in der oberen Kammer 48, wird der Kolbenteil 42 gegen den Anschlagring 52 anliegen. Andererseits kann die Zylindereinheit nach der vorliegenden Erfindung auch mit dem in Fig. 8 gezeigten Hydraulikkreis 56 eingesetzt werden. In diesem Hydraulikkreis 56 ist das Drosselventil 20 so eingesetzt, daß in der oberen Kammer 48 ein größerer Druck als in der unteren Kammer 50 herrscht, wenn das Gerät auf ebenem Grund arbeitet. Hierdurch wird sich der Kolbenteil 42 auf dem Stangenteil 32 nach unten bis zu dem Stangenende 26 des Zylinderteils 22 verstellen, wie es in Fig. 2 dargestellt ist. Der Anschlagring 52 weist in dieser Stellung zu dem Kolbenteil 42 einen vertikalen Abstand auf, und, wenn das Gerät eine Bodenvertiefung durchfährt, wird sich zunächst der Stangenteil 32 mit dem Anschlagring 52 unter dem Gewicht des Gerätes 12 nach unten verstellen, ohne aber gegen den Kolbenteil 42, der sich bei diesem Vorgang nicht verstellt, zur Anlage zu kommen. Auch bei diesem Vorgang wird weniger Flüssigkeit in die obere Kammer 48 eintreten, und das sich nach unten Verstellen des Gerätes 12 erfolgt schneller als bisher.

Der in Fig. 8 wiedergegebene Hydraulikkreis 56 ist noch mit einem Dreistellungsventil 58 versehen, das in der Fig. 8 seine erste Stellung einnimmt, die dem Normalbetrieb des Gerätes entspricht. In der ersten Stellung kann der Kolbenteil 42 auf dem Stangenteil 32 gleiten oder schwimmen, da in der oberen Kammer 48 der größere Druck herrscht, weil die untere Kammer 50 sich stromabwärts des Drosselventils 20 befindet. Die zweite Stellung des Ventils 58 wird dann gewählt, wenn ein Teil des Gewichtes des Gerätes auf das Fahrzeug übertragen werden soll. Die dritte Stellung des Ventils 58 dient dazu, um das Gerät 12 in seine Transportstellung hoch zu fahren.

Beim dargestellten Ausführungsbeispiel ist die Zylindereinheit 14 mit ihrem Sockelende 24 an das Fahrzeug 10 und über den Stangenteil 32 an das Gerät 12 angeschlossen. Der Stangenteil 32 tritt deshalb an der Unterseite des Zylinderteils 22 aus. Ein Ansammeln von Schmutz in diesem Bereich wird dadurch weitgehend verhindert und damit auch ein Eintreten von Schmutz in das Innere des Zylinderteils. Andererseits ist es aber auch möglich, die Anordnung so zu gestalten, daß der Stangenteil am oberen Ende des Zylinderteils austritt und mit dem Fahrzeug verbunden ist. In einem solchen Fall greift dann der Zylinderteil am Gerät an.

Die Zylindereinheit 14 nach Fig. 7 ist etwas andersgestaltet als die Zylindereinheiten 14 der Fig. 2 bis 6. Es ist zu erkennen, daß die obere Kammer 48 der Zylindereinheit nach Fig. 7 nicht mit einem Kanal für Flüssigkeit versehen ist. Stattdessen ist in der oberen Kammer 48 eine Feder 54 eingesetzt, die bestrebt ist, den Kolbenteil 42 auf dem Stangenteil 32 nach unten in Richtung auf das Stangenende 26 des Zylinderteils 22 zu verstellen. Lufteintrittsöffnungen sind in das Sockelende 24 eingearbeitet. Sie sind so groß, daß der Ein- und Austritt der Luft bei sich verstellenden Stangenteil 32 oder Kolbenteil 42 nicht wesentlich behindert wird. Die untere Kammer 50 ist an einen Hydraulikkreis angeschlossen, wie er in dem Dokument US-A-4 920 732 offenbart ist. Dieser Hydraulikkreis erlaubt das wahlweise Ein- und Ausströmen von Flüssigkeit in die untere Kammer 48, wenn ein Ventil entsprechend betätigt wird. Das Ventil weist eine in ihrem Durchmesser veränderbare Durchflußöffnung auf, so daß bei verkleinerter Durchflußöffnung Flüssigkeit in das Stangenende 26 des Zylinderteils 22 gedrückt und der Kolbenteil 42 gegen die Wirkung der Feder 54 nach oben verschoben wird. Der Kolbenteil 42 wird dadurch nach oben gegen den Anschlagring 52 gedrückt, wodurch ein Teil des Gewichtes des Gerätes auf das Fahrzeug übertragen wird. Der Kolbenteil 42 kann aber auch noch höher in dem Zylinderteil 22 zum Ausheben des Gerätes verschoben werden. Die Feder 54 übt auf den Kolbenteil 42 eine Druckkraft in Richtung auf das Stangenende 26 des Zylinderteils 22 aus, wodurch beim Arbeiten im ebenen Gelände ein Abstand oder Freiraum zwischen Kolbenteil 42 und Anschlagring 52 entsteht, der es dem Stangenteil 32 beim Auftreffen des Gerätes auf Bodenunebenheiten erlaubt, sich in dem Zylinderteil 22 entweder nach oben oder unten zu verstellen, ohne daß der Anschlagring 52 gegen den Kolbenteil 42 zur Anlage kommt. Auch auf diese Weise wird weniger Flüssigkeit bewegt und das Gerät schneller verstellt.

**Patentansprüche**

1. Vorrichtung zur hydraulischen Gewichtsverlagerung eines auf dem Boden laufenden und an ein Fahrzeug (10) angebauten Gerätes (12) mit einer an das Fahrzeug (10) und an das Gerät (12) anschließbaren Zylindereinheit (14), die einen Zylinderteil (22) aufweist, in dem ein Kolbenteil (42) und ein aus dem Zylinderteil (22) einenends austretender Stangenteil (32) verstellbar sind, dadurch gekennzeichnet, daß der Kolbenteil (42) auf dem Stangenteil (32), der an seinem sich im Zylinderteil (22) befindlichen Ende (34) einen Anschlag aufweist, verschiebbar angeordnet ist.

2. Vorrichtung nach Anspruch 1, dadurch gekennzeichnet, daß der Anschlag als Anschlagring (52) ausgebildet ist.

3. Vorrichtung nach Anspruch 1, dadurch gekennzeichnet, daß der Kolbenteil (42) eine Zentralöffnung (44) aufweist, durch die sich der Stangenteil (32) erstreckt.

4. Vorrichtung nach einem oder mehreren der vorherigen Ansprüche, wobei der Zylinderteil (22) an seinem dem Gerät (12) zugelegenen Ende (26) über einen Kanal (30) mit einem Hydraulikkreis (16, 56) verbunden ist, dadurch gekennzeichnet, daß der Kolbenteil (42) entgegen der Wirkung einer Feder (54) verstellbar ist, die einenends gegen den Kolbenteil (42) und anderenends gegen das dem Kanal (30) abgelegene Ende (24) des Zylinderteils (22) anliegt.

5. Vorrichtung nach Anspruch 4, dadurch gekennzeichnet, daß der Innendurchmesser der Feder (54) größer ist als der Außendurchmesser des Stangenteils (32).

6. Vorrichtung nach einem oder mehreren der vorherigen Ansprüche, wobei der Zylinderteil (22) durch den Kolbenteil (42) in eine obere und in eine untere Kammer (48, 50) aufgeteilt ist, dadurch gekennzeichnet, daß beide Kammern (48, 50) an den Hydraulikkreis (16, 56) angeschlossen sind und eine Ventilsteuerung vorgesehen ist, über die der Druck derart steuerbar ist, daß beim Einsatz des Gerätes (12) im ebenen Gelände der Kolbenteil (42) gegen den Anschlag oder in Richtung auf das Kolbenstangenseitige Ende (26) des Zylinderteils (22) verschoben wird.

FIG. 1

FIG. 8

FIG. 2

FIG. 3

FIG. 4

FIG. 5

FIG. 6

FIG. 7

8

Europäisches Patentamt

**EUROPÄISCHER RECHERCHENBERICHT**

Nummer der Anmeldung

EP 91 12 1468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | US-A-4 920 732 (M.C. LEE et al.)<br>* Spalte 1, Zeile 62 - Spalte 3, Zeile 41; Abbildung 1 *<br>--- | 1-3 | A 01 B 63/11<br>A 01 D 34/64<br>F 15 B 15/14 |
| Y | GB-A-2 132 273 (COMPAGNIE FRANCAISE DES PETROLES)<br>* Seite 1, Zeile 102 - Seite 2, Zeile 46; Abbildungen 2,5 * | 1-3 | |
| A | | 6 | |
| A | GB-A- 626 806 (ELECTRO-HYDRAULICS LTD)<br>* Seite 2, Zeilen 79-103; Abbildung 2 *<br>--- | 1-3 | |
| A | FR-A-2 203 947 (TOKICO)<br>* Seite 4, Zeile 26 - Seite 5, Zeile 28; Abbildung 1 *<br>--- | 4,5 | |
| A | FR-A-2 512 319 (SOCIETE D'EXPLOITATION DE CHARRUES NAUD.)<br>--- | | |
| A | AT-B- 388 483 (STEYR-DAIMLER-PUCH AG)<br>----- | | **RECHERCHIERTE SACHGEBIETE (Int. Cl.5)**<br><br>A 01 D<br>A 01 B<br>F 15 B |

Der vorliegende Recherchenbericht wurde für alle Patentansprüche erstellt

| Recherchenort | Abschlußdatum der Recherche | Prüfer |
|---|---|---|
| DEN HAAG | 01-04-1992 | SCHMITT J.W. |